# EUROPEAN PATENT SPECIFICATION

(11) **EP 2 354 449 B1**
(45) Date of publication and mention of the grant of the patent: **06.11.2019**
(21) Application number: 10196297.5
(22) Date of filing: 21.12.2010
(51) Int. Cl.: F01D 3/02, F01D 25/08, F02C 7/12, F01D 11/00, F01D 25/12, F01D 5/08

(54) **Method and apparatus for double flow steam turbine first stage cooling**
Verfahren und Vorrichtung zur Erststufenkühlung einer zweiflutigen Dampfturbine
Procédé et appareil pour le refroidissement de la première étape d'une turbine à vapeur à double flux

(30) Priority: 04.01.2010 US 651535
(43) Date of publication of application: 10.08.2011
(73) Proprietor: General Electric Company, Schenectady, NY 12345 (US)
(72) Inventor: Rivas, Flor Del Carmen, Schenecatdy, NY 12345 (US); Brilliant, Howard, Schenectady, NY 12345 (US); Koza, Kenneth Michael, Schenectady, NY 12345 (US); Pandey, Vishwas Kumar, Bangalore 560066 Karnataka (IN)
(74) Representative: BRP Renaud & Partner mbB Rechtsanwälte Patentanwälte Steuerberater

(56) References cited:
- WO-A1-98/17897
- DE-A1- 3 406 071
- US-A- 3 429 557
- US-A1- 2007 065 273

## Description

The invention relates to steam turbines and, more particularly, to cooling a tub region of a double-flow steam turbine.

Double-flow steam turbines typically include two parallel flow turbine ends arranged on a common shaft. A tub section is often located between the turbine ends and disposed around the shaft. Steam flows into the steam turbine radially inwardly toward the tub section, and the steam flow then divides, turns axially, and flows in opposing directions to enter each of the two parallel flow turbine ends.

Steam flow may become stagnant between the rotor and the tub section of the double-flow steam turbine resulting in a high temperature on the rotor due to windage heating of the stagnant steam. That is, the area in which steam flow is stagnant may have an increased temperature as compared to the temperature in other areas of the turbine. Achieving a steady state temperature facilitates avoidance of component failure. High rotor temperature potentially shortens the useful life of the rotor and may lead to failure of the steam turbine.

US 2007/065273 describes cooling of a double flow steam turbine by supplying steam to the turbine to form a main inlet steam flow, allowing steam to bleed from the main inlet flow to an annulus bounded by an inner shell, nozzle plate and rotor body of the turbine, and directing the bleed steam to bucket dovetail steam balance holes. DE 3406071 describes cooling of the rotors of steam turbines with a fresh steam inlet chamber arranged between an inlet duct leading through the turbine housing and the axial blading and which is subdivided by an annular shaft shield into a radially outer main inlet chamber and a radially inner secondary inlet chamber. The shaft shield is held on fixed housing sections and provided with inlet ducts for shaft cooling steam, which after diverting in the secondary inlet chamber along shaft surfaces of the rotor can be introduced into a stepped space of the turbine blading.

US 3429557 describes a system where relatively cool steam discharging from first stage rotor buckets is used to cool the turbine rotor in the vicinities of wheel space and the root areas of the first stage rotor wheels, regardless of the condition or performance of labyrinth seals. The pressure in wheel space is prevented from decreasing to the point where hot steam can be drawn from a bucket root area into a wheel space. WO 98/17897 describes a power plant, whereby steam from an intermediate pressure turbine is fed into a heat recovery steam generator that cools the steam and heats water streams to form cooling steam for at least one of a turbine and a combustor. The cooled steam exits the steam generator and passes through a low pressure turbine, thereby generating more rotating shaft power, and is condensed into the water streams for heating into cooling steam in the steam generator.

The present invention resides in a steam turbine and in a method of cooling a double-flow steam turbine as defined in the appended claims.

Embodiments of the invention will now be described, by way of example, with reference to the accompanying drawings, in which:
FIG. 1 is a schematic illustration of an exemplary opposed flow, or double flow, steam turbine; and
FIG. 2 is a more detailed illustration of a portion of the steam turbine schematically illustrated in FIG. 1.

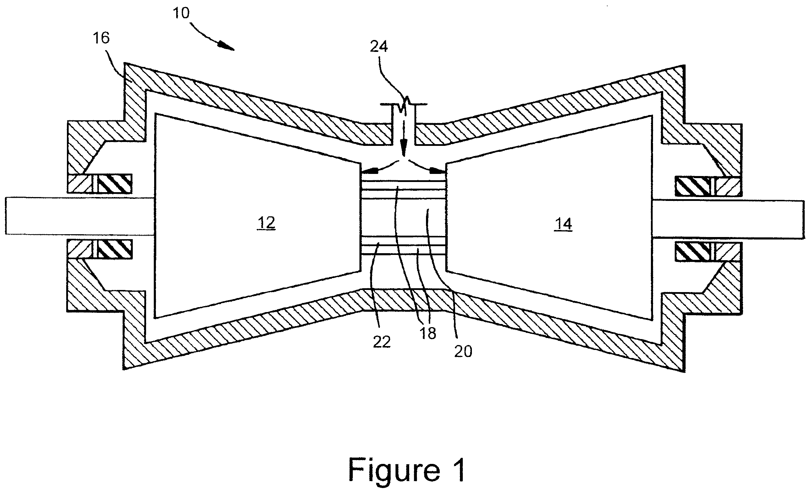

FIG. 1 is a schematic representation of a double-flow steam turbine 10. Although the invention is described in the context of its use in a double-flow steam turbine, the described embodiments will also work for a single flow machine.

Steam turbine 10 includes a generator end 12 disposed nearest to a generator (not shown) and a turbine end 14 disposed farthest from the generator, and the generator end 12 and turbine end 14 may be disposed in an outer case 16. A double flow tub section or tub diaphragm 18 is disposed axially between the generator end 12 and the turbine end 14 and radially outboard of a rotor 20. The rotor 20 may comprise, for example, a drum rotor or at least one rotor disk disposed on a rotor shaft. The rotor 20 and the tub section 18 are configured and disposed to define an annulus 22 between the rotor 20 and the tub section 18.

Steam enters the steam turbine 10 at an inlet 24, which is disposed radially outboard of the rotor 20 and the tub section 18. Steam entering the steam turbine 10 at the inlet 24 flows toward the tub section 18, divides, and then enters either of the generator end 12 or the turbine end 14.

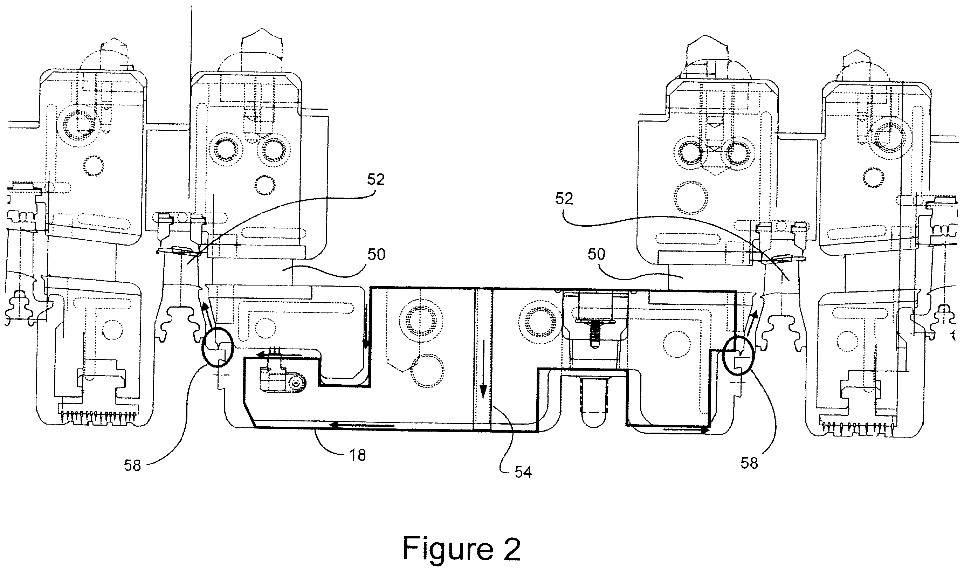

FIG. 2 is a more detailed illustration of a portion of the steam turbine schematically illustrated in FIG. 1. In a prior art construction, the tub diaphragm 18 is used between the first stages to aid in guiding the steam flow through the turbine. The first stages of the double flow steam turbine include a plurality of first stage nozzles and first stage dovetail/bucket assemblies 52.

The region below the tub diaphragm 18 can be become stagnant with respect to steam flow and will heat up due to windage from the rotating shaft. The tub diaphragm 18 is thus provided with cooling holes 54 around the circumference of the tub diaphragm 18. In an exemplary embodiment, four cooling holes are provided, but it will be appreciated that more or fewer holes can be provided depending on the application and system design. The cooling holes 54 permit steam flow to pass below the tub diaphragm 18 to thereby effect positive cooling in that region.

The first stage wheel and blade dovetails 52 are cooled by the steam flow below the tub diaphragm 18.

The cooling circuit, including the cooling holes 54 in the tub diaphragm, also includes root radial seals 58 that allow a small amount of flow around the first stage nozzles 50 back into the steam path before the first stage buckets 52. As such, the first stage wheel and the blade dovetails are cooled without the steam bypassing the first stage blade.

The cooling circuit of the described embodiments helps to avoid component failure due to higher exposed temperatures.

## Claims

1. A double-flow steam turbine comprising:
a generator end (12);
a turbine end (14);
a double-flow tub diaphragm (18) disposed axially between the generator end (12) and the turbine end;
a first stage including a plurality of first stage nozzles (50) and a plurality of first stage buckets (52) secured in respective blade dovetails, a steam path defined from an inlet region (24), through the turbine end (14), to a steam outlet; and
a cooling path including cooling holes (54) in the tub diaphragm (18) configured to permit a diverted steam flow to pass into a region below the tub diaphragm (18) for cooling of the blade dovetails first stage, wherein the cooling path is configured to allow the diverted steam flow to pass below the tub diaphragm (18) and back into the steam path upstream the first stage buckets (52) without the diverted steam flow bypassing the first stage buckets (52), **characterized in that** root radial seals (58) (50)are disposed adjacent the first stage nozzles at the root of each bucket (52) in the cooling path and configured such that the diverted steam flow flows back into the steam path upstream the first stage buckets (52) via the root radial seals (58) for providing cooling to the first stage wheel and blade dovetails.

2. The steam turbine according to claim 1, comprising four cooling holes (54) in the tub diaphragm (18).

3. A steam turbine according to claim 1 or claim 2, wherein the cooling holes (54) are disposed around a circumference of the tub diaphragm (18).

4. A method of cooling a double-flow steam turbine, the steam turbine including a generator end (12) and a turbine end (14) and a double-flow tub diaphragm (18) disposed axially between the generator end (12) and the turbine end (14), a first stage of the steam turbine including a plurality of first stage nozzles (50) and a plurality of first stage buckets (52) secured in respective blade dovetails, wherein a steam path is defined from an inlet region (24), through the turbine end (14), to a steam outlet, the method comprising diverting a diverted steam flow on the steam path through cooling holes (54) in the tub diaphragm (18) and through a cooling path; and permitting the diverted steam to flow around the first stage nozzles (50) and back into the steam path upstream of the first stage buckets (52), **characterized in** permitting the diverted steam to flow back into the steam path upstream of the first stage buckets (52) via root radial seals (58) disposed in the cooling path adjacent the first stage nozzles for providing cooling to the first stage wheel and blade dovetails, whereby the cooling path is a cooling path for cooling of the blade dovetails.

## Patentansprüche

1. Doppelstrom-Dampfturbine, umfassend:
ein Generatorende (12);
ein Turbinenende (14);
eine Doppelstrom-Wannenmembran (18), die axial zwischen dem Generatorende (12) und dem Turbinenende angeordnet ist;
eine erste Stufe, die eine Vielzahl von Düsen (50) der ersten Stufe und eine Vielzahl von Schaufeln (52) der ersten Stufe einschließt, die in jeweiligen Blatt-Schwalbenschwänzen befestigt sind, wobei ein Dampfpfad von einem Einlassbereich (24) über das Turbinenende (14) zu einem Dampfauslass definiert ist; und
einen Kühlpfad, der Kühllöcher (54) in der Wannenmembran (18) einschließt, die dazu konfiguriert sind, einen umgeleiteten Dampfstrom in einen Bereich unterhalb der Wannenmembran (18) zum Kühlen der Schaufel zu leiten, wobei der Kühlpfad dazu konfiguriert ist, den umgeleiteten Dampfstrom unter der Wannenmembran (18) und zurück in den Dampfpfad stromaufwärts der Schaufeln (52) der ersten Stufe passieren zu lassen, ohne dass der umgeleitete Dampfstrom an den Schaufeln (52) der ersten Stufe vorbeiströmt,
**dadurch gekennzeichnet, dass** Wurzelradialdichtungen (58) (50) angrenzend an die Düsen der ersten Stufe an der Wurzel jeder Schaufel (52) im Kühlpfad angeordnet und so konfiguriert sind, dass der umgeleitete Dampfstrom über die Wurzelradialdichtungen (58) in den Dampfpfad stromaufwärts der Schaufeln (52) der ersten Stufe zurückfließt, um die Rad- und Blatt-Schwalbenschwänze der ersten Stufe zu kühlen.

2. Dampfturbine nach Anspruch 1, umfassend vier Kühllöcher (54) in der Wannenmembran (18).

3. Dampfturbine nach Anspruch 1 oder Anspruch 2, wobei die Kühllöcher (54) um einen Umfang der Wannenmembran (18) angeordnet sind.

4. Verfahren zum Kühlen einer Doppelstrom-Dampfturbine, wobei die Dampfturbine ein Generatorende (12) und ein Turbinenende (14) und eine Doppelstrom-Wannenmembran (18) aufweist, die axial zwischen dem Generatorende (12) und dem Turbinenende (14) angeordnet sind, wobei eine erste Stufe der Dampfturbine eine Vielzahl von Düsen (50) der ersten Stufe und eine Vielzahl von Schaufeln (52) der ersten Stufe aufweist, die in jeweiligen Blatt-Schwalbenschwänzen befestigt sind, wobei ein Dampfpfad von einem Einlassbereich (24) durch das Turbinenende (14) zu einem Dampfauslass definiert ist, wobei das Verfahren umfasst: Umleiten eines umgeleiteten Dampfstroms im Dampfpfad durch Kühllöcher (54) in der Wannenmembran (18) und durch einen Kühlpfad; und Ermöglichen, dass der umgeleitete Dampf um die Düsen (50) der ersten Stufe herum und zurück in den Dampfpfad stromaufwärts der Schaufeln (52) der ersten Stufe fließt, **gekennzeichnet durch** Ermöglichen, dass der umgeleitete Dampf über Wurzelradialdichtungen (58), die im Kühlpfad angrenzend an die Düsen der ersten Stufe angeordnet sind, zurück in den Dampfpfad stromaufwärts der Schaufeln (52) der ersten Stufe strömt, um die Rad- und Blatt-Schwalbenschwänze der ersten Stufe zu kühlen, wobei der Kühlpfad ein Kühlpfad zum Kühlen der Blatt-Schwalbenschwänze ist.

## Revendications

1. Turbine à vapeur à double flux comprenant :
une extrémité de générateur (12) ;
une extrémité de turbine (14) ;
un diaphragme de cuve à double flux (18) disposé axialement entre l'extrémité de générateur (12) et l'extrémité de turbine ;
un premier étage comprenant une pluralité de buses de premier étage (50) et une pluralité de godets de premier étage (52) fixés dans des queues d'aronde de pale respectives, un trajet de vapeur défini à partir d'une région d'entrée (24), à travers l'extrémité de turbine (14), vers une sortie de vapeur ; et
un trajet de refroidissement incluant des trous de refroidissement (54) dans le diaphragme de cuve (18) configuré pour permettre à un flux de vapeur dévié de passer dans une région sous le diaphragme de cuve (18) pour refroidir le premier étage de queues d'arondes de pale, dans lequel le trajet de refroidissement est configuré pour permettre au flux de vapeur dévié de passer sous le diaphragme de cuve (18) et de revenir dans le trajet de vapeur en amont des godets de premier étage (52) sans que le flux de vapeur dévié ne contourne les godets de premier étage (52),
**caractérisé en ce que** des joints radiaux racines (58) (50) sont disposés adjacents aux buses de premier étage au niveau de la racine de chaque godet (52) dans le trajet de refroidissement et configurés de telle sorte que le flux de vapeur dévié s'écoule en retour dans le trajet de vapeur en amont des joints de premier étage (52) par l'intermédiaire des joints radiaux racines (58) pour fournir un refroidissement à la roue et aux queues d'aronde de pale de premier étage.

2. Turbine à vapeur selon la revendication 1, comprenant quatre trous de refroidissement (54) dans le diaphragme de cuve (18).

3. Turbine à vapeur selon la revendication 1 ou la revendication 2, dans laquelle les trous de refroidissement (54) sont disposés autour d'une circonférence du diaphragme de cuve (18).

4. Procédé de refroidissement d'une turbine à vapeur à double flux, la turbine à vapeur incluant une extrémité de générateur (12) et une extrémité de turbine (14) et un diaphragme de cuve à double flux (18) disposé axialement entre l'extrémité de générateur (12) et l'extrémité de turbine (14), un premier étage de la turbine à vapeur incluant une pluralité de buses de premier étage (50) et une pluralité de godets de premier étage (52) fixés à des queues d'aronde de pale respectives, dans lequel un trajet de vapeur est défini d'une région d'entrée (24), à travers l'extrémité de turbine (14), vers une sortie de vapeur, le procédé comprenant les étapes consistant à dévier un flux de vapeur dévié sur le trajet de vapeur à travers des trous de refroidissement (54) dans le diaphragme de cuve (18) et à travers un trajet de refroidissement ; et à permettre au flux dévié de s'écouler autour des buses de premier étage (50) et de revenir dans le trajet de vapeur en amont des godets de premier étage (52), **caractérisé en ce qu'**il permet au flux dévié de s'écouler en retour dans le trajet de vapeur en amont des godets de premier étage (52) par l'intermédiaire de joints radiaux racines (58) disposés dans le trajet de refroidissement adjacent aux buses de premier étage pour fournir un refroidissement à la roue et aux queues d'aronde de pale de premier étage, moyennant quoi le trajet de refroidissement est un trajet de refroidissement pour refroidir les queues d'aronde de pale.
